# EUROPEAN PATENT APPLICATION

(11) **EP 4 826 932 A1**
(43) Date of publication of application: **21.10.2026**
(21) Application number: 26152232.0
(22) Date of filing: 16.01.2026
(51) Int. Cl.: H02G 1/14, H02G 3/06, H02G 15/02, H02G 7/05

(54) **METHOD AND TOOL FOR ATTACHING AN ANCHORING COMPONENT TO AN ARMOR WIRE OF A TRANSMISSION LINE**

(30) Priority: 14.04.2025 NO 20250418
(71) Applicant: Nexans, 92400 Courbevoie (FR)
(72) Inventor: Skagen, Daniel, 1615 Fredrikstad (NO); Svarød, Ulf, 1798 Aremark (NO)
(74) Representative: Acapo Onsagers AS

(57) **Abstract**

A method for attaching an anchoring component to an armor wire (16) of a transmission line for a fitting comprises the steps of providing an anchoring component (2) having an aperture for feeding through the armor wire, placing the anchoring component with the aperture onto the armor wire (16) by passing an end of the armor wire through the aperture and moving the anchoring component along the armor wire (16) into a predetermined first position having a first distance (d1) to an interface section at the end of the armor wire (16), temporarily fixating the armor wire (16) at a second position having a second distance (d2) to the interface section, the second distance (d2) exceeding the first distance (d1), introducing a torque at the interface section to twist a section of the armor wire (16) extending from the interface section up to the temporarily fixated second position, thereby interlocking the anchoring component (2) and the aperture together, and releasing the armor wire (16) at the second position, wherein the armor wire (16) has a non-circular cross-sectional shape, and wherein the aperture is shaped to conform a cross-sectional shape of the armor wire (16).

## Description

### Technical field

The invention relates to a method and a tool for attaching an anchoring component to an armor wire of a transmission line.

### Background of the invention

Cables and conduits with armoring layers are essential components in various applications, including offshore energy systems, telecommunications, marine installations, onshore environments, and indoor settings. These cables and conduits facilitate the transmission of electrical power, data, or flowing media across different environments. Designed to withstand harsh conditions, they endure high pressures, external mechanical stresses, and corrosive environments. A typical armored cable or conduit may consist of multiple layers, including an inner core for power, signal transmission, or media flow, insulation layers, and/or an outer armoring layer. The armoring layer, often composed of a plurality of high-strength armor wires, provides mechanical protection and tensile strength, ensuring the cable can endure extreme forces during installation and operation.

To securely fixate or terminate the armored cable or conduit and maintain its structural integrity, the armoring layer must be reliably connected to a fitting. This fitting may, for example, include a structural hang-off, which is used to support and secure the cable or conduit at a fixed point, either at the end or along its length. It may also be connected to a pulling device, which may be a mechanism used to pull the cable or conduit into place at its end. Another device could be a jointing device, which is used to join two sections of cable or conduit. Conventional methods for connecting the armor wires to these devices may involve clamping, wedging, brazing, welding, or chemical bonding. However, these techniques can be labor-intensive, require specialized equipment, or introduce potential failure points due to uneven load distribution, undetected defects in the assembly, environmental factors such as corrosion, and high costs associated with the complex manufacturing of involved components.

### Summary of the invention

The object of the invention may lie in improving the connection between the armoring layer and a fitting to enhance reliability and load transfer efficiency while minimizing the complexity and effort required for assembly and installation.

This object is met by a method having the features of claim 1. Advantageous embodiments and further improvements may be gathered from the subclaims and the following description.

A method for attaching an anchoring component to an armor wire of a transmission line for a fitting is proposed, the method comprising the steps of providing an anchoring component having an aperture for feeding through the armor wire, placing the anchoring component with the aperture onto the armor wire by passing an end of the armor wire through the aperture and moving the anchoring component along the armor wire into a predetermined first position having a first distance to an interface section at the end of the armor wire, temporarily fixating the armor wire at a second position having a second distance to the interface section, the second distance exceeding the first distance, introducing a torque at the interface section to twist a section of the armor wire extending from the interface section up to the temporarily fixated second position, thereby interlocking the armor wire and the aperture together, and releasing the armor wire at the second position, wherein the armor wire has a non-circular cross-sectional shape, and wherein the aperture is shaped to conform the cross-sectional shape of the armor wire.

In the context of the present disclosure, the first distance is measured from the interface section at the end of the armor wire to the axial surface of the anchoring component that faces to the end of the armor wire. The first distance and the second distance are measured from a delimiting edge of the interface section that faces away from the end of the armor wire. The interface section may be intended for being engaged with a tool to introduce a torque into the armor wire. Thus, the interface section has a certain length. The second distance is measured from the interface section to the second position, which represents a position of a side of a fixating device for fixating the armor wire that is nearest to the armor wire end.

If the transmission line is, for example, a high voltage power cable, it may comprise multiple layers, each designed to perform a specific function in the transmission of electrical energy under high power conditions. At the core of the cable, a conductor or a plurality of conductors, often made of high-conductivity materials such as copper or aluminum, provide(s) the transmission of an electrical current. The conductor(s) may be surrounded by an insulating layer, which may be composed of a polymeric material such as cross-linked polyethylene (XLPE), ethylene propylene rubber (EPR). Over the insulation, a semi-conductive screen may be applied to evenly distribute electrical stress and minimize partial discharges, which may be followed by a metallic screen acting as a radial water barrier and provide a path for fault currents.

The transmission line may, however, have a simpler setup, depending on their intended operational purpose. In general, the transmission line may also be an umbilical, a pipe, a hose, or a conduit which is armored with an armoring layer.

An armoring layer may be provided, which serves for a mechanical protection and tensile strength. The armoring layer comprises profiled metallic wires. The armoring layer may include helically wound metallic wires, commonly made of materials such as carbon steel, stainless steel, copper, aluminium, etc. to withstand axial tensile loads and resist external mechanical impacts. The metallic wires may be coated, such as by a zinc (through electro plating / hot dip galvanizing), tin, a plastic sheath (by extrusion), or spray coated with paint systems. These wires may be referred to as armor wires. They may be flat. The armor wires may have a generally rectangular or oblong cross-sectional shape with a significantly greater width than thickness. The cross-sectional shape may have optionally round or rounded edges, to maximize a surface area contact with the surrounding layers, thereby optimizing anchoring and load transfer. The exact shape of the cross-section may be employed depending on the specific application and the required balance between flexibility and load capacity and could include any non-circular round, oval, square, rectangular, triangular, or trapezoidal shape, or any polygonal shape, wherein the edges and/or corners of the cross-sectional shape may be rounded. The armoring layer may further include counter-wound layers to ensure uniform mechanical behavior and minimize torsional forces during cable operation. An outer sheath, which may be made of a tough polymer such as polyethylene (PE), polypropylene (PP) or polyvinyl chloride (PVC), may enclose the entire assembly, providing environmental protection against moisture, chemicals, and abrasion.

At a dedicated position of the transmission line, a fitting, such as a termination assembly, may be applied to allow a safe and efficient connection while protecting the internal components of the transmission line from environmental and mechanical stresses. The fitting may, if it is exemplarily a termination for a high power cable, include a housing that provides structural support and that acts as a barrier against external contaminants such as moisture, dust, and chemical agents. Inside the housing, a casting component, which may be made of a high-strength material such as epoxy or a polyester resin, is used to encapsulate and mechanically secure the armor wires, ensuring their anchoring and preventing movement under mechanical loads or thermal expansion. The fitting may be arranged at an end of the cable or along its length.

The casting component may also provide dielectric properties, which may be beneficial for isolating the metallic armor wires from high-voltage elements of the fitting, if the transmission line is a cable, in particular a high voltage power cable, and reducing the risk of electrical discharge. The type of casting component is not vital for the invention and it may include an epoxy resin, polyester resin, and even concrete filling. The housing itself may often be designed with an integrated coupling mechanism to interface with external equipment or to connect to a grounding system.

The twisting of the armor wires serves to support a mechanical anchoring of wire end parts within the casting material of the fitting. Each twist creates a mechanical interlock, requiring a substantial reactive torque to straighten the wire and extract it from the casting material, which is difficult to achieve due to a short effective moment arm. The term "considerable" is to be understood as referring to a torque that is sufficiently high to avoid the straightening of the armor wire under the exertion of a maximum design load to the fitting. The twisted sections of an armor wire distribute compressive and tensile stresses more evenly across the casting material, reducing localized stress concentrations and preventing material failure.

The method according to the invention allows to improve the mechanical coupling between the armor wires of a transmission line and the casting material of a fitting.

At first, the anchoring component is provided. The anchoring component is placed with the aperture onto the armor wire. A free end of the armor wire is inserted into the aperture and the anchoring component may be pushed along the armor wire towards the first position. The anchoring component may be understood as a component that extends in a radial direction away from the armor wire when arranged on the armor wire. It may thus extend transversally to a main extension direction of the armor wire.

The aperture may, for example, be arranged in or near a center of the anchoring component. Preferably, the cross-sectional shape of the aperture substantially matches the cross-sectional shape of the armor wire. Before twisting the armor wire it may be substantially straight or straight enough to allow the anchoring component to be easily be pushed along the armor wire to the first position. A gap between the aperture and the armor wire may be dimensioned such that the anchoring component can be manually moved along the armor wire. For example, this may include a narrow fit with the armor wire. A narrow fit, as will be explained further below, may also be referred to as a close sliding fit allowing the armor wire to be inserted into the aperture with minimal clearance that allows for sliding the anchoring component along the armor wire. The anchoring component will at least loosely be held on the armor wire when no external force acts onto it.

The temporary fixation of the armor wire at the second position is to be understood as locally holding the armor wire in a fixed orientation. This may, for example, be accomplished with a fixating device that engages a section of the armor wire. When introducing the torque, the engaged section of the armor wire is held stationary and the twisting only occurs in parts of the armor wire that are not fixated.

The torque may be introduced through a rotating tool. The tool may be manually operable through a crank, or it may be automated through a suitable drive device. To introduce the torque into the armor wire, an interface component may be used that is configured to engage with the armor wire. For example, the interface component has a first side configured to receive the interface section at the end of the armor wire, and a second side configured to connect to the rotating tool. The first side may comprise a first recess with a shape that conforms the shape of the armor wire. When the interface section of the armor wire is inserted into the first recess, the torque can be transferred from the interface component into the armor wire. The second side of the interface component may comprise a second recess with a shape that conforms the shape of a driving end of the rotating tool. When driving the rotating tool, the torque is transferred from the rotating tool through via the interface component into the armor wire. It is understood that both the first recess and the second recess shall not be circular. When the rotating tool rotates, the interface section of the armor wire follows the rotation, such that a section of the armor wire that extends from the second position to the interface section of the armor wire is twisted.

As indicated above, the anchoring component is placed between the second position and the interface section of the armor wire and thus rotates when the armor wire is twisted. The region of the armor wire enclosed by the aperture of the anchoring component will thus be interlocked by the twisted armor wire and prevents the anchoring component to leave the first position. The anchoring component will thus be firmly connected to the armor wire.

After twisting, the armor wire can be released at the second position and the armor wire with attached anchoring component can be embedded into a casting material. After curing the casting material, the anchoring component is firmly held in a relative position to the casting material. Particularly, a rotation of the anchoring component is prevented. This further prevents an untwisting of the armor wire as a result from high longitudinal forces acting onto the fitting.

Temporarily fixating may comprise clamping the armor wire at the second position to prevent a twisting of the armor wire at the second position and in a further distance from the interface section of the armor wire. The clamping may comprise exerting pressing forces on two opposite sides of the armor wire, such that the armor wire is firmly held at the second position. In addition, or as an alternative thereto, a fixating device may engage the armor wire in a form-fitting manner. Then, an engaged region of the armor wire is constrained through the form fit, and is thus prevented from rotation. By clamping the armor wire, only the section between the second position and the interface section of the armor wire will be twisted, while the remaining part of the armor wire, i.e. parts with a larger distance to the interface section of the armor wire, remains undeformed.

Introducing the torque may comprise continuously and uninterruptedly twisting the section of the armor wire. The continuous and uninterrupted deformation of the armor wire ensures a more uniform distribution of strain along the material of the armor wire, reducing the likelihood of localized stress concentrations. Maintaining a consistent twisting process prevents strain hardening in specific regions, which may occur during pauses as dislocations could become immobilized. This also ensures that the material remains ductile and twistable throughout the process. The continuous twisting also promotes steady thermal conditions and prevents uneven cooling or heating, potentially resulting in thermal gradients that induce residual stresses or undesirable microstructural changes. Applying an even torque minimizes the risk of anisotropic mechanical properties or inhomogeneous grain structures. The uninterrupted twisting enhances process efficiency and repeatability, reducing the likelihood of defects that would necessitate additional processing or repair.

The anchoring component may completely enclose the armor wire and radially extend from the armor wire. The aperture may thus be understood as a through-hole with a contour that is completely inside the anchoring component, i.e. that is completely surrounded by material of the anchoring component. This secures the anchoring component in a direction radial to a main extension direction of the armor wire. Preferably, the aperture is arranged in the center of the anchoring component.

In an alternative, the anchoring component may be configured to partially enclose the armor wire and radially extend from the armor wire. For example, the armor wire may have an aperture that is open to one radial side of the anchoring component. This may lead, for example, to a U-shaped cut extending radially from the center of the anchoring component.

The aperture of the anchoring component may be shaped to provide a narrow fit with the armor wire. A narrow fit, which may also be referred to as a close sliding fit, is to be understood as a type of fit where the armor wire can still be inserted into the aperture with minimal clearance, allowing for a sliding motion of the anchoring component along the armor wire. The narrow fit ensures a precise alignment and minimal play between the mating surfaces of the anchoring component and the armor wire. This supports the attachment of the anchoring component on the armor wire. In one of many possible examples, the armor wire may be a flat wire with a width of the wire being a plurality of the thickness of the wire. The armor wire may e.g. have a cross-section with a thickness of 2,5 mm and width of 7,5 mm. For example, the armor wire and the aperture may comprise a clearance of about 0,1 to 0,2 mm, which may be sufficient for placing the anchoring component in the first position.

The second distance may equal 1 to 3 times the first distance plus the thickness of the anchoring component. In an embodiment, the second distance equals substantially 1,5 times the first distance plus the thickness of the anchoring component. Thus, the length of an first section that extends between the interface section and the first position may be roughly be double the size of a second section that extends between the anchoring component and the second position. The first section may thus roughly comprise double the amount of twists compared to the second section. This improves the connection between the armor wire and the casting material.

The first section may be twisted by 0,25 to 1,5 revolutions. The second section may be twisted by 0,25 to 1,5 revolutions. The first section may be twisted more than the second section or vice versa. Also, the first section and the second section may be twisted by the same amount of revolutions.

In another embodiment, the first section may be twisted by more than 1,5 revolutions. Also, the second section between the anchoring component and the second position may be twisted by more than 1,5 revolutions, too.

A resulting twist pitch of the armor wire is linked to the material properties and may vary. For example, an armor wire having a cross-sectional surface with dimensions of 7,5 and 2,5 mm made from a grade 110 steel may have twist pitch of 37 mm. The twist pitch may be determined by testing and the method for attaching the anchoring component as well as the tool used for conducting the method may be adjusted accordingly.

The section may be twisted until the anchoring component has rotated over a predetermined rotation angle, wherein the rotation angle is in a range of 90° to 540°. Particularly when the anchoring component is placed in a greater distance to the end of the armor wire, the required twisting angle at the interface section is a plurality of the rotation angle of the anchoring component.

The invention further relates to a method for providing a fitting to a transmission line, comprising the steps of attaching an anchoring component each to a plurality of armor wires of the transmission line according to the above description, arranging an enclosure to a part of the transmission line, and supplying a casting material into the enclosure to enclose the armor wires. As stated above, the transmission line may be a cable or a conduit. The fitting may, for example, be a termination. The casting material enclosing the armor wire with attached anchoring component acts as a mechanical support by directly supporting the anchoring component axially within the casting material and by preventing the twisted armor wire from unwinding. The interface between the anchoring component and twisted armor wire towards the casting material is purely mechanical, and there is no requirement for adhesion.

Still further, the invention relates to a tool for attaching an anchoring component to an armor wire of a transmission line for a fitting, wherein the armor wire has a non-circular cross-sectional shape, the tool comprising a frame, an interface component rotatably held on the frame, and a fixating device attached to or attachable to the frame, wherein the interface component has a first side configured to receive an interface section at the end of the armor wire, and a second side configured to connect to a driving device, and wherein the fixating device is configured to temporarily fixate the orientation of a region of the armor wire in a distance to the end of the armor wire relative to a section between the fixating device and the end of the armor wire.

The frame may be considered a base component that is configured to hold the individual elements of the tool. In a simple embodiment, the frame may be realized in form of a single, elongated or flat component having holes for holding the interface component and the fixating device. It serves for defining and maintaining a predetermined spatial relationship between the elements of the tool.

As stated further above, the fixating device serves for preventing the twisting of the armor wire from progressing beyond the second position, i.e. the position where the fixating device fixates the armor wire.

As also stated further above, the interface component serves for transferring the torque from a driving device into the interface section of the wire. It may be designed to conform the cross-sectional shape of the driving device and of the interface section of the wire.

The fixating device may comprise a plier-like arrangement of two levers joined at a fulcrum, wherein a first one of the two levers may be attached to or attachable to the frame, and wherein a second one of the two levers may be pivotable relative to the first lever between an open position and a closed position. A user operating the tool may thus bring the two levers into the closed position, thereby clamping or enclosing the armor wire locally. Since the fixating device is fixed relative to the interface component, the cross section of the armor wire is securely held in its initial orientation. The plier is particularly simple and easy to operate.

The second lever may have a recess configured to enclose at least a part of an armor wire inserted into the first side of the interface component, when the fixating device is in the closed position. The recess may thus provide a form-fit engagement with the armor wire, thus eliminating the need for a clamping force onto the armor wire.

In analogy to this, both levers, i.e. the first lever and the second lever, may comprise a recess to provide the form-fit engagement.

The invention also relates to a fitting assembly for a transmission line, comprising a portion of a transmission line, wherein the transmission line comprises armor wires, wherein the armor wires comprise a twisted section, and wherein at least one of the armor wires comprises an anchoring component attached to the respective armor wire within the twisted section. Preferably, a plurality of the armor wires comprises an anchoring component. As explained above, this may be achieved by interlocking the respective armor wire and an aperture of the anchoring component together.

The anchoring component may have an aperture for feeding through the armor wire, and the anchoring component may be configured for extending away from the armor wire in a radial direction when the anchoring component is placed on the armor wire by feeding the armor wire through the aperture.

As indicated above, the anchoring component may completely enclose the armor wire and radially extend from the armor wire. This means that the aperture may thus be understood as a through-hole with a contour that is arranged completely inside the anchoring component. In an alternative, the anchoring component may instead be configured to partially enclose the armor wire and radially extend from the armor wire.

The anchoring component may be attached to the respective armor wire by a mechanical interlock between the armor wire and the aperture.

The anchoring component may have a disk-like shape. In an alternative embodiment, it may have a square or generally rectangular shape. Any of the boundary edges may be rounded and/or chamfered.

### Brief description of the drawings

In the following description this invention will be further explained by way of exemplary embodiments shown in the drawings:
Fig. 1a shows an anchoring component with a disc shape in a perspective view.
Fig. 1b shows an anchoring component with a rectangular shape.
Fig. 1c shows an anchoring component with a trapezoidal shape.
Fig. 2a and 2b show an armor wire and the anchoring component moved placed onto it.
Fig. 3 shows a tool for fixating the anchoring component to the armor wire.
Fig. 4 shows the armor wire with a helical shape after twisting.
Fig. 5a to 5d shows the power cable with two different fittings.
Fig. 6 shows a test cylinder for conducting a tensile test.
Fig. 7 shows a strain diagram from the tensile test.

### Detailed description of exemplary embodiment

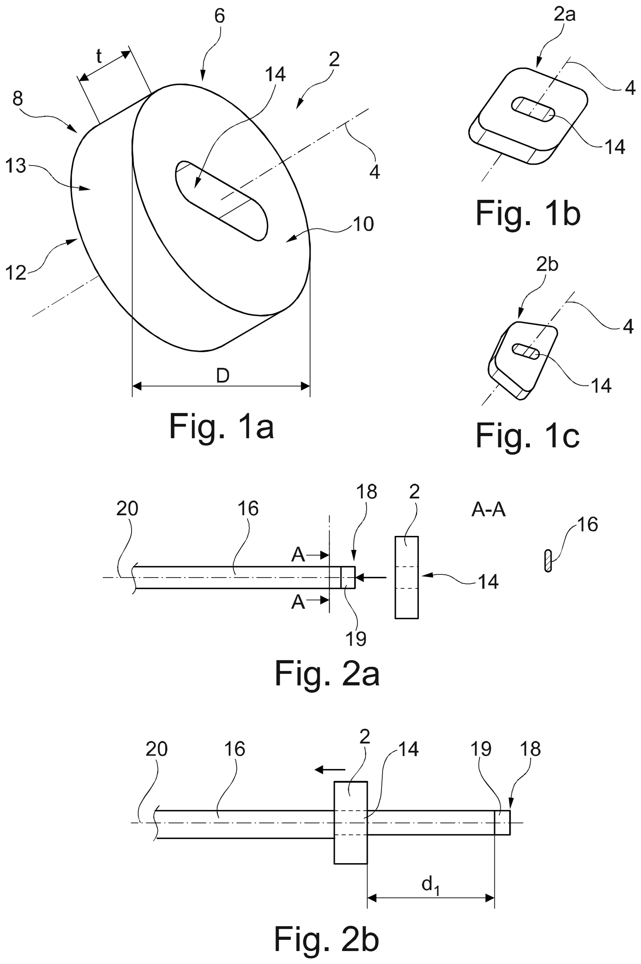

Fig. 1a shows an anchoring component 2 for attachment on a flat armor wire in a perspective view. The anchoring component 2 is provided with a disc-like shape having a thickness t and a diameter D. The anchoring component 2 has a central axis 4, around which a first circular edge 6 and a second circular edge 8 are created. The two circular edges 6 and 8 define a first axial face 10 and a second axial face 12, which are exemplarily equal in size. A strip-shaped, continuously curved peripheral surface 13 extends between both faces 10 and 12 parallel to the central axis 4. As apparent from fig. 1, the first face 10 and the second face 12 are distanced to each other by the thickness t. The diameter D is a plurality of the thickness t. Thus, in this exemplary embodiment, the anchoring component 2 has a flat cylindrical shape.

In a central region and parallel to the central axis 4, and aperture 14 is created in the anchoring component 2. The aperture 14 extends parallelly to the central axis 4 through the anchoring component 2. The cross-section of the aperture 14 is substantially rectangular, wherein the short edges of the rectangle have the shape of a half circle. It is understood that other shapes are possible and that the circular shape is merely an example. For example, the anchoring component 2 may also have oval, rounded, square or rectangular end faces 10 and 12 and/or the size of the end faces 10 and 12 may differ from each other.

Figs. 1b and 1c show anchoring components 2a and 2b with different shapes. Fig. 1a shows a rectangular anchoring component 2a and Fig. 1b shows a trapezoidal anchoring component 2b. It is to be understood that various further shapes are not ruled out and the examples shown herein shall not be understood as limiting the invention.

Fig. 2a and 2b show an armor wire 16 of an armoring layer of a high power cable as an example for a transmission line. In this exemplary embodiment, the armor wire 16 has a flat cross-section. The aperture 14 and the armor wire 16 are shaped complementary to each other. The anchoring component 2 is to be fastened on the armor wire 16. To achieve this, the anchoring component 2 is initially placed on an end 18 of the armor wire 16. At the end 18, an interface section 19 is defined, which is described in further detail below. After placing the anchoring component 2 on the armor wire 16, it is moved along an extension direction 20 of the armor wire 16 to a first position, which has a first distance d1 to the interface section 19. This means that the section of the armor wire 16 between the end 18 and the anchoring component 2 is free from the anchoring component 2.

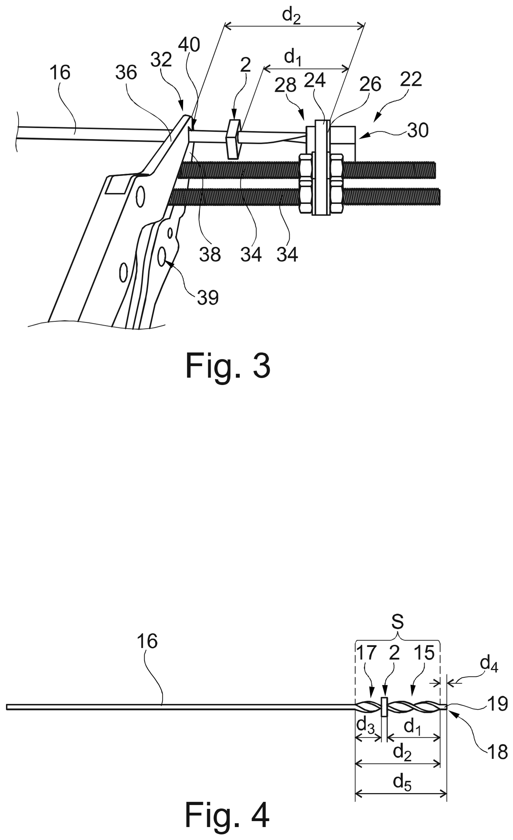

Fig. 3 shows a tool 22 for fixating the anchoring component 2 to the armor wire 16. The tool 22 comprises a frame 24, on which an interface component 26 is rotatably supported. This may, for example, be achieved by providing a through-hole in the frame 24 and placing a rotatable interface component 26 in the through-hole. The interface component 26 may be secured from slipping off the frame 24.

The interface component 26 has a first side 28 and a second side 30. The first side 28 has a first recess, which is not shown herein, adapted to conform the shape of the cross-section of the armor wire 16. For example, the first recess may have a shape that is similar to the shape of the aperture 14. Thus, the first side 28 may engage the armor wire 16 in a form-fit manner.

The second side 30 in turn has a second recess or a second profile, which is not shown in detail herein, which is adapted to conform the shape of a driving device. The driving device may, for example, be a part of a motorized tool, such as a screwing or drilling device. By providing a torque onto the second side 30, the armor wire 16 will be twisted.

At a second position, which has a second distance d2 to the interface section 19, a fixating device 32 fixates the armor wire 16 locally. In an axial direction, the fixating device 32 extends from the second distance d2 further away from the interface section 19. The fixating device 32 is mechanically coupled with the frame 24 through two rod-like supports 34 that extend away from the frame 24. When the armor wire 16 is inserted into the interface component 26, the rod-like supports 34 are parallel to the armor wire 16.

For example, the fixating tool 32 is a plier-like device having a first lever 36 and a second lever 38 joined at a fulcrum 39. The first lever 36 has a recess 40 that is adapted to enclose a part of the cross-section of the armor wire 16. When the levers 36 and 38 are in a closed position, the locally fixated part of the armor wire 16 is prevented from rotating. When the torque is introduced into the second end 30 of the interface component 26, the armor wire 16 is twisted in a region extending from the interface section 19 to the second position. Since the anchoring component 2 is arranged on the armor wire 16, it rotates when the armor wire 16 is twisted. Due to the twisting, the part of the armor wire 16 located inside the aperture 14 interlocks with inner walls of the aperture 14. Thus, the armor wire 16 and the anchoring component 2 engage each other firmly and the anchoring component 2 remains in this position. The mechanical connection between the anchoring component 2 and the armor wire 16 is sufficiently sturdy, such that high axial forces acting on the anchoring component 2 along the main extension direction 4 can be absorbed.

Resultantly, the armor wire 16 will have a helical shape in a section s that extends between the interface section 19 and the second position, wherein the anchoring component 2 is arranged within the helical structure. This is shown in fig. 4.

In fig. 4 it is apparent that an inner twisted length with the reference "d3" of a second (twisted) section 17 between the anchoring component 2 and the second position is smaller than the first distance d1, which is associated with a first (twisted) section 15. For example, the first distance d1 is substantially twice the size of the length d3 of the second section 17, such that the armor wire 16 has double the amount of twists in the first section 15 as in the second section 17. This increased number of twists can enhance the mechanical interlock between the anchoring component and the armor wire, providing greater stability. As illustrated in Fig. 4, the interface section 19 has a length d4. The interface section 19 is to be inserted with the length d4 into the first side 28 of the interface component 26. A total length of the shaped armor wire 16 including both twisted sections 15 and 17, as well as the interface section 19, is shown as d5.

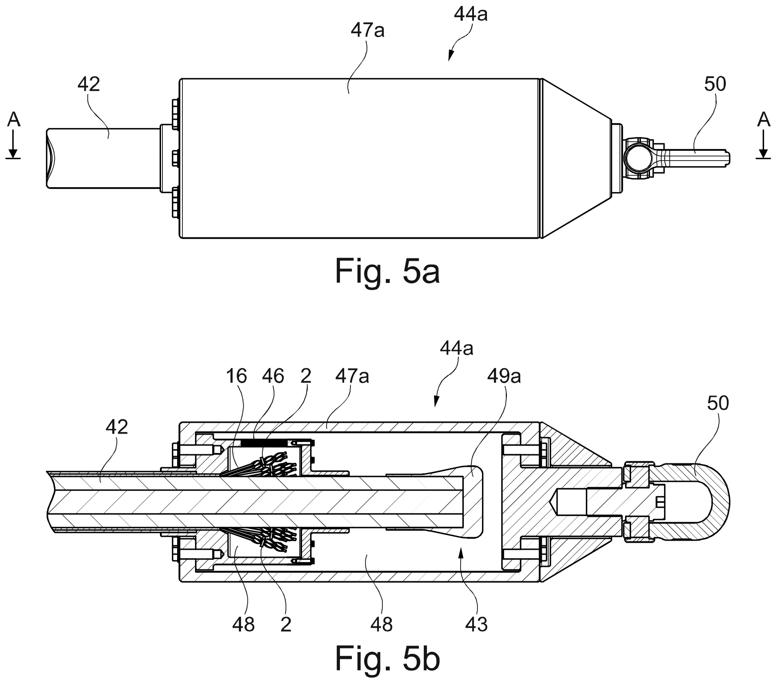

Figs. 5a and 5b show the power cable 42 with an end fitting 44a. The power cable 42 has a plurality of different layers, including an armoring layer having a plurality of armor wires 16. The armor wires 16 are fed into an enclosure 46 of the end fitting 44a, and a casting material 48 is supplied into the enclosure 46 to embed the armor wires 16 therein. The armor wires 16 and the anchoring components 2 attached to the armor wires 16 will be completely enclosed by the casting material 48, in order to provide a reliable and sturdy mechanical connection between the end fitting 44a and the armor wires 16. In this exemplary embodiment, an outer casing 47a surrounds the enclosure 46. An end 43 of the cable 42 is surrounded by an end seal 49a and is embedded into the outer casing 47a through the casting material 48 that fills the void inside the outer casing 47a. As an example, an eye 50 is attached to the end fitting 44a to be able to pull the power cable 42.

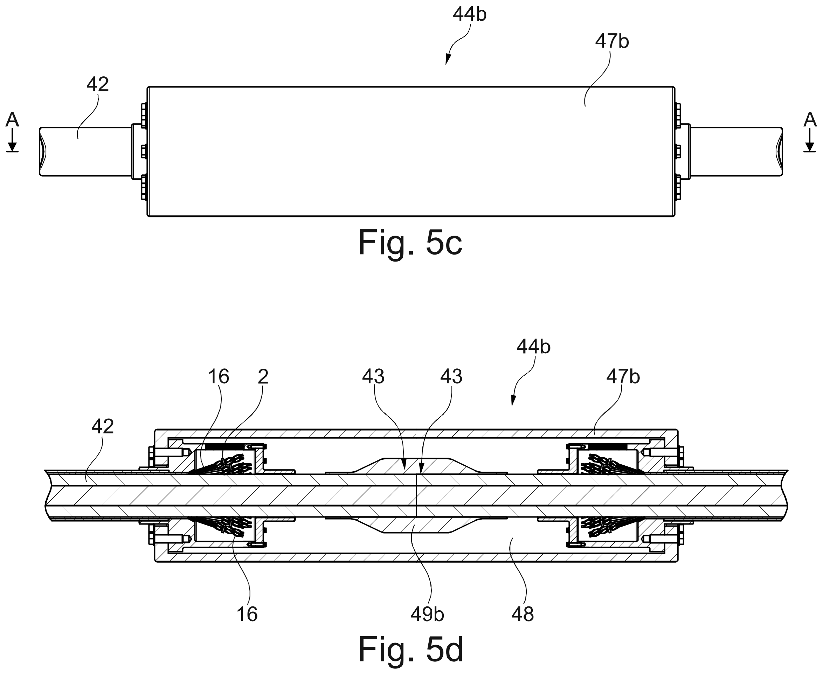

Figs. 5c and 5d show a cable joint 44b as another example for a fitting. Here, two power cables 42 are jointed. The respective cable ends 43 are electrically connected and surrounded by a joint 49b. Armor wires 16 of both cable ends 43 are equipped with anchoring components 2 and enclosed by the casting material 48 supplied into individual enclosures 46 for both cable ends 43. In addition, an outer casing 47b encloses both cable ends 43 and both enclosures 46, wherein the void inside the outer casing 47b is filled with the casting material 48.

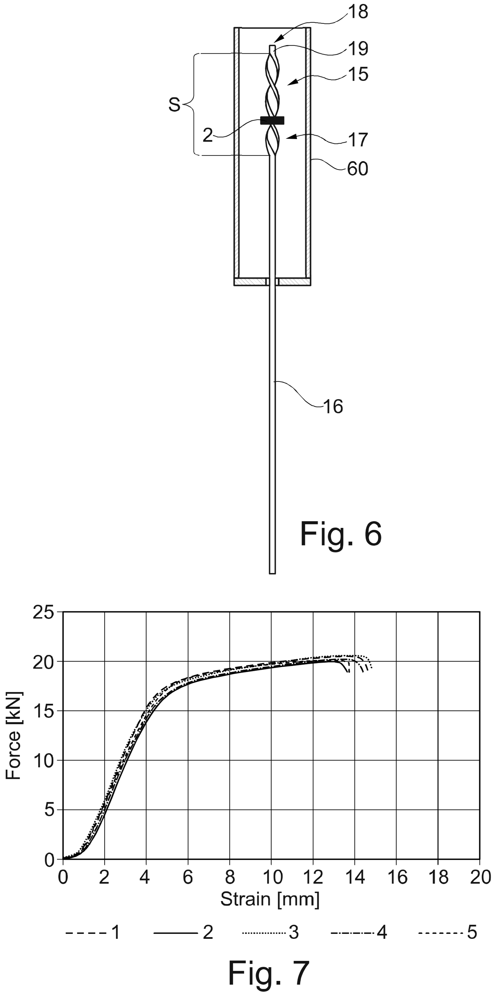

Fig. 6 shows a test cylinder 60, into which an armor wire 16 having an anchoring component 2 is embedded into the casting material for conducting a tensile test.

During the tensile test, a pulling force is exerted onto the cylinder 60 and it is investigated, at which force the mechanical connection between the cylinder 60 and the armor wire 16 fails.

This is shown in the strain diagram in fig. 7, where maximum pulling forces over wire strains are illustrated with several armor wires of the same type. The associated tests are numbered with consecutive numbers 1 to 5. With the anchoring component 2 attached to the armor wire 16, as demonstrated, a very reliable connection can be achieved resulting in high maximum pulling forces on a fitting coupled with the armor wires 16.

### REFERENCE NUMERAL

- 2: anchoring component
- 4: central axis
- 6: first circular edge
- 8: second circular edge
- 10: first axial face
- 12: second axial face
- 13: peripheral surface
- 14: aperture
- 15: first section
- 16: armor wire
- 17: second section
- 18: end
- 19: interface section
- 20: extension direction
- 22: tool
- 24: frame
- 26: interface component
- 28: first side
- 30: second side
- 32: fixating device
- 34: rod-like supports
- 36: first lever
- 38: second lever
- 39: fulcrum
- 40: recess
- 42: power cable
- 43: cable end
- 44a, b: fitting
- 46: enclosure
- 47a, b: outer casing
- 48: casting material
- 49a: end seal
- 49b: joint
- 50: lifting eye
- 60: test cylinder

- d1: first distance
- d2: second distance
- d3: twisted length of second section
- d4: length of interface section
- d5: total length of shaped armor wire
- D: diameter
- s: length of twisted section
- t: thickness

## Claims

1. Method for attaching an anchoring component to an armor wire of a transmission line (42) for a fitting (44a, 44b), comprising the steps of:
- providing an anchoring component (2) having an aperture (14) for feeding through the armor wire (16),
- placing the anchoring component (2) with the aperture (14) onto the armor wire (16) by passing an end (18) of the armor wire (16) through the aperture (14) and moving the anchoring component (2) along the armor wire (16) into a predetermined first position having a first distance (d1) to an interface section (19) at the end (18) of the armor wire (16),
- temporarily fixating the armor wire (16) at a second position having a second distance (d2) to the interface section (19), the second distance (d2) exceeding the first distance (d1),
- introducing a torque at the interface section (19) of the armor wire (16) to twist a section (s) of the armor wire (16) extending from the interface section (19) up to the temporarily fixated second position, thereby interlocking the armor wire (16) and the aperture (14) together, and
- releasing the armor wire (16) at the second position,
wherein the armor wire (16) has a non-circular cross-sectional shape, and
wherein the aperture (14) is shaped to conform a cross-sectional shape of the armor wire (16).

2. The method according to claim 1, wherein temporarily fixating comprises clamping the armor wire (16) at the second position to prevent a twisting of the armor wire (16) at the second position and in a further distance from the end (18) of the armor wire (16).

3. The method according to claim 1 or 2, wherein introducing the torque comprises continuously and uninterruptedly twisting the section (s) of the armor wire (16).

4. The method according to any one of the preceding claims, wherein the anchoring component (2) completely encloses the armor wire (16) and radially extends from the armor wire (16).

5. The method according to any one of the preceding claims, wherein the aperture (14) of the anchoring component (2) is shaped to provide a narrow fit with the armor wire (16).

6. The method according to any one of the preceding claims, wherein the second distance (d2) equals 1 to 3 times the first distance (d1) plus the thickness of the anchoring component (2).

7. The method according to any one of the preceding claims, wherein the section (s) is twisted until the anchoring component (2) has rotated over a predetermined rotation angle, and wherein the rotation angle is in a range of 90° to 540°.

8. A method for providing a fitting (44a, 44b) to a transmission line (42), comprising the steps of:
- attaching an anchoring component (2) each to a plurality of armor wires (16) of the transmission line (42) according to any of the preceding claims,
- placing the end (18) of the transmission line (42) into an enclosure (46) of the fitting (44a, 44b), and
- supplying a casting material (48) into the enclosure (46) to enclose the ends (18) of the armor wires (16).

9. A tool (22) for attaching an anchoring component (2) to an armor wire (16) of a transmission line (42) for a fitting (44a, 44b), wherein the armor wire has a non-circular cross-sectional shape, the tool (22) comprising:
- a frame (24),
- an interface component (26) rotatably held on the frame (24), and
- a fixating device (32) attached to or attachable to the frame (24),
wherein the interface component (26) has a first side (28) configured to receive an interface section at the end (18) of the armor wire (16), and a second side (30) configured to connect to a driving device (22), and
wherein the fixating device (32) is configured to temporarily fixate the orientation of a region of the armor wire (16) in a distance to the end (18) of the armor wire (16) relative to a section between the fixating device (32) and the end (18) of the armor wire (16).

10. The tool (22) according to claim 9,
wherein the fixating device (32) comprises a plier-like arrangement of two levers (36, 38) joined at a fulcrum (39),
wherein a first one of the two levers (36) is attached to or attachable to the frame (24), and
wherein a second one of the two levers (38) is pivotable relative to the first lever (36) between an open position and a closed position.

11. The tool (22) according to claim 10,
wherein the second lever (38) has a recess (40) configured to enclose at least a part of an armor wire (16) inserted into the first side (28) of the interface component (26), when the fixating device (32) is in the closed position.

12. A fitting assembly for a transmission line (42), comprising:
- a portion of a transmission line (42),
wherein the transmission line (42) comprises armor wires (16),
wherein the armor wires (16) comprise a twisted section (s), and
wherein at least one of the armor wires (16) comprise an anchoring component (2) attached to the respective armor wire (16) within the twisted section (s).

13. The fitting assembly according to claim 12,
wherein the anchoring component (2) has an aperture (14) for feeding through the armor wire (16), and
wherein the anchoring component (2) is configured for extending away from the armor wire (16) in a radial direction when the anchoring component (2) is placed on the armor wire (16) by feeding the armor wire (16) through the aperture (14).

14. The fitting assembly according to claim 13,
wherein the anchoring component (2) is attached to the respective armor wire (16) by a mechanical interlock between the armor wire (16) and the aperture (14).

15. The fitting assembly according to claim 13 or 14,
wherein the anchoring component (2) has a disk-like shape.
